# EUROPEAN PATENT APPLICATION

(11) **EP 4 250 837 A1**
(43) Date of publication of application: **27.09.2023**
(21) Application number: 20961811.5
(22) Date of filing: 17.11.2020
(51) Int. Cl.: H04W 72/04, H04W 72/12

(54) **DATA TRANSMISSION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN); ZHAO, Zhenshan, Dongguan, Guangdong 523860 (CN)
(74) Representative: Taor, Simon Edward William
(86) International application number: PCT/CN2020/129386
(87) International publication number: WO 2022/104519

(57) **Abstract**

Methods for data transmission, devices, and storage mediums are provided. The method includes retransmitting (S201), by a first device, a data block through a second configured grant (CG) resource on condition that initial transmission or retransmission of the data block through a first CG resource by the first device fails.

## Description

### TECHNICAL FIELD

This disclosure relates to the field of communication, and in particular, to methods for data transmission, devices, and storage mediums.

### BACKGROUND

Device to device (D2D) communication is a sidelink (SL)-based transmission technology. Different from a manner in which communication data is received or transmitted via a base station in a conventional cellular system, D2D communication adopts a D2D direction communication mode. If SL operates in an unlicensed spectrum, it needs to perform listen before talk (LBT) detection before transmission of a data block. A result of LBT detection can affect a success rate of transmission of a data block. Therefore, how to improve an efficiency of transmission of a data block in an SL transmission is a goal which is being pursed all the time.

### SUMMARY

To solve the above technical problem, implementations of the present disclosure provide methods for data transmission, devices, and storage mediums.

According to a first aspect, the present disclosure provides a method for data transmission. The method includes retransmitting, by a first device, a data block through a second configured grant (CG) resource on condition that initial transmission or retransmission of the data block through a first CG resource by the first device fails.

According to a second aspect, the present disclosure provides a method for data transmission. The method includes receiving, by a second device, retransmission of a data block through a second CG resource on condition that initial transmission or retransmission of the data block to the second device through a first CG resource by a first device fails.

According to a third aspect, the present disclosure provides a first device. The first device includes a transmitting unit configured to retransmit, by the first device, a data block through a second CG resource on condition that initial transmission or retransmission of the data block through a first CG resource by the first device fails.

According to a fourth aspect, a second device is provided. The second device includes a receiving unit configured to receive, by the second device, retransmission of a data block through a second CG resource on condition that initial transmission or retransmission of the data block to the second device through a first CG resource by a first device fails.

According to a fifth aspect, a first device is provided. The first device includes a processor and a memory configured to store a computer program capable of being run on the processor. The memory is configured to store the computer program. The processor is configured to invoke and run the computer program stored in the memory to enable the first device to perform steps of the above method for data transmission.

According to a sixth aspect, a second device is provided. The second device includes a processor and a memory configured to store a computer program capable of being run on the processor. The memory is configured to store the computer program. The processor is configured to invoke and run the computer program stored in the memory to enable the second device to perform steps of the above method for data transmission.

According to a seventh aspect, a chip is provided. The chip includes a processor configured to invoke and run a computer program in a memory to enable a device equipped with the chip to perform the above method for data transmission performed by the first device.

According to an eighth aspect, a chip is provided. The chip includes a processor configured to invoke and run a computer program in a memory to enable a device equipped with the chip to perform the above method for data transmission performed by the second device.

According to a ninth aspect, a storage medium is provided. The storage medium stores an executable program. The executable program is executed by a processor to implement the above method for data transmission performed by the first device.

According to a tenth aspect, a storage medium is provided. The storage medium stores an executable program. The executable program is executed by a processor to implement the above method for data transmission performed by the second device.

According to an eleventh aspect, a computer program is provided. The computer program enables a computer to perform the above method for data transmission performed by the first device.

According to a twelfth aspect, a computer program is provided. The computer program enables a computer to perform the above method for data transmission performed by the second device.

According to the method for data transmission in implementations of the present disclosure, the first device retransmits the data block through the second CG resource on condition that initial transmission or retransmission of the data block through the first CG resource by the first device fails. As such, in the case where initial transmission or retransmission of the data block through the first CG resource by the first device fails, the first device performs retransmission of the data block without relying on resources dynamically scheduled by a network device, and retransmits the data block through the second CG resource configured by the network device, which can avoid latency caused by dynamical scheduling of resources for retransmission of the data block and avoid a problem that resources for retransmission cannot be obtained in time, thereby improving the efficiency of transmission of the data block.

### BRIEF DESCRIPTION OF THE DRAWINGS

FIG. 1 is a schematic diagram illustrating a communication system architecture provided in implementations of the present disclosure.
FIG. 2 is an optional processing flow chart of a method for data transmission provided in implementations of the present disclosure.
FIG. 3 is another optional processing flow chart of a method for data transmission provided in implementations of the present disclosure.
FIG. 4 is a detailed optional processing flow chart of a method for data transmission provided in implementations of the present disclosure.
FIG. 5 is another detailed optional processing flow chart of a method for data transmission provided in implementations of the present disclosure.
FIG. 6 is yet another detailed optional processing flow chart of a method for data transmission provided in implementations of the present disclosure.
FIG. 7 is a schematic structural diagram of a first device provided in implementations of the present disclosure.
FIG. 8 is a schematic structural diagram of a second device provided in implementations of the present disclosure.
FIG. 9 is a schematic structural diagram of a device provided in implementations of the present disclosure.
FIG. 10 is a schematic block diagram of a chip provided in implementations of the present disclosure.

### DETAILED DESCRIPTION

In order to understand the features and technical content of implementations of the present disclosure in more detail, implementation of the implementations of the present disclosure will be described in detail below in combination with the accompanying drawings. The attached accompanying drawings are for reference only and are not intended to limit the implementations of the present disclosure.

Before the detailed illustration of the implementations of the present disclosure, relevant information involved in the implementations of the present disclosure will be illustrated.

The operating carrier for sidelink (SL) may be an unlicensed spectrum for example 2.4 Gigahertz (GHz), 5 GHz, 6 GHz, or 60GHz. A network device configures a terminal device for data transmission or reception with SL transmission resources and other control parameters for SL communication. The network device can allocate SL transmission resources to the terminal device through dynamic scheduling; or the network device can allocate configured grant (CG) transmission resources to the terminal device. There are mainly two allocation manners for the network device to allocate CG transmission resources to the terminal device: type-1 CG and type-2 CG, which are specifically as follows.

Type-1 CG: the network device configures SL transmission resources for the terminal device through radio resource control (RRC) signaling. The RRC signaling can be used to configure transmission resources and transmission parameters that include a cycle of SL transmission resources, time-domain resources, frequency-domain resources, a demodulation reference signal (DMRS), a modulation and coding scheme (MCS), etc. When the terminal device receives higher-layer parameters, the terminal device can immediately perform SL transmission on configured time-frequency resources through configured transmission parameters.

Type-2 CG: a 2-step resource configuration mode is adopted, that is, the network device allocates resources through RRC signaling and downlink control information (DCI). First, RRC signaling is used to configure transmission resources and transmission parameters that include a cycle of time-frequency resources, redundant version (RV), the number of retransmissions, and hybrid automatic repeat request (HARQ) process number. Then, DCI is used to activate transmission of type-2 CG and configure other transmission resources and transmission parameters that include time-domain resources, frequency-domain resources, a MCS, and so on. When the terminal device receives RRC signaling, the terminal device cannot immediately perform SL transmission through resources and parameters configured through high-layer parameters. Instead, the terminal device can only perform SL transmission when a corresponding DCI is received and used to activate and configure other resources and transmission parameters. In addition, the network device can deactivate CG transmission through DCI. When the terminal device receives DCI for deactivation, the terminal device cannot perform SL transmission through the transmission resources.

Transmit (TX) user equipment (UE) receives transmission resource configuration and control parameters transmitted by the network device. The TX UE transmits data to receive (RX) UE and waits for feedback information from the RX UE.

RX UE: the RX UE receives transmission resource configuration and control parameters transmitted by the network device. If the RX UE can correctly decode a data packet from the TX UE, the RX UE feeds back HARQ acknowledge (ACK) on a physical sidelink feedback channel (PSFCH). If decoding fails, the RX UE feeds back HARQ negative acknowledge (NACK) on the PSFCH.

In related art, if SL operates in an unlicensed spectrum, it needs to perform listen before talk (LBT) detection before transmission of a data block. If a channel for transmission of the data block is sensed to be busy through LBT detection, transmission of the data block fails. In this case, it needs to retransmit the data block through dynamical scheduling of the network device, that is, the network device dynamically schedules resources for retransmission of the data block. As such, additional latency may be introduced. If a Uu interface between the terminal device and the network device also operates in an unlicensed spectrum, resources for retransmission of the data block may not be obtained in time.

Technical solutions in implementations of the present disclosure will be illustrated in combination with the accompanying drawings in the implementations of the present disclosure. Apparently, the illustrated implementations are merely some of the implementations of the present disclosure, rather than all the implementations of the present disclosure. Based on the implementations of the present disclosure, all other implementations obtained by those of ordinary skill in the art without creative efforts shall fall into the scope of protection of the present disclosure.

The technical solutions in implementations of the disclosure can be applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a universal mobile telecommunication system (UMTS), a worldwide interoperability for microwave access (WiMAX) system, the fifth generation (5G) system, or the like.

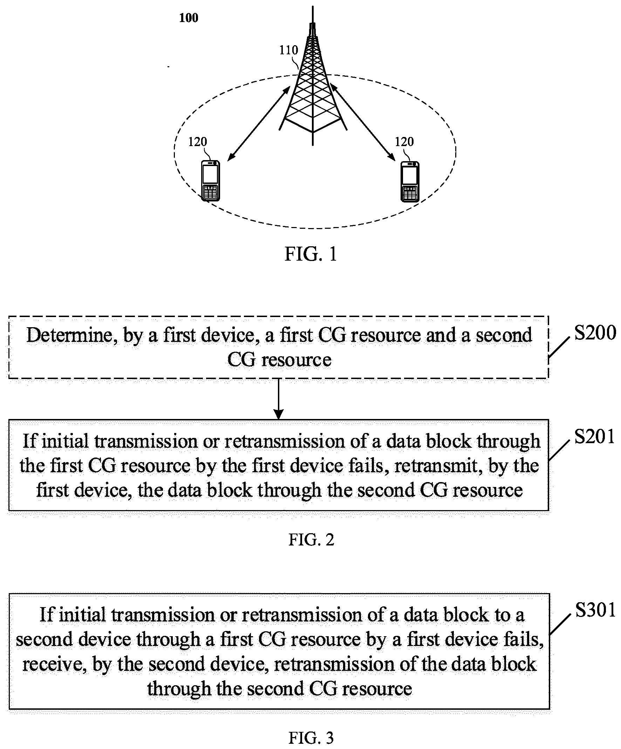

Exemplary, a communication system 100 applied in the implementations of the present disclosure may be illustrated in FIG. 1. The communication system 100 may include a network device 11 that can communicate with a UE 120 (or a communication terminal device, a terminal device). The network device 110 may provide communication coverage for a specific geographic area, and may communicate with UE located within the coverage area. Optionally, the network device 110 may be a base transceiver station (BTS) in the GSM system or CDMA system, a node B (NB) in the WCDMA system, an evolutional node B (eNB or eNodeB) in the LTE system, or a radio controller in the cloud radio access network (CRAN), or the network device may be a mobile switching center, a relay station, an access point, an on-board device, a wearable device, a hub, a switch, a bridge, a router, a network device in the 5G network or a network device in future-evolved public land mobile network (PLMN).

The communication system 100 further includes at least one UE 120 located within the coverage of the network device 110. The "UE" used herein includes but is not limited to a device configured to communicate via a wired line, another data connection/network, a wireless interface, a device which is part of another UE and configured to receive/transmit communication signals, and/or an Internet of things (IoT) device. Examples of the wired line may include, but is not limited to, a public switched telephone network (PSTN), a digital subscriber line (DSL), a digital cable, and a direct connection cable. Examples of the wireless interface may include, but is not limited to, a wireless interface for a cellular network, a wireless local area network (WLAN), a digital television network (such as a digital video broadcasting-handheld (DVB-H) network), a satellite network, and an amplitude modulation-frequency modulation (AM-FM) broadcast transmitter. A UE configured to communicate via a wireless interface may be called a "wireless communication terminal device", a "wireless terminal device", or a "mobile terminal device".

Optionally, device to device (D2D) communication can be performed between the UEs 120.

FIG. 2 is an optional processing flow chart of a method for data transmission provided in implementations of the present disclosure. The method includes at least the following.

At S201, if initial transmission or retransmission of a data block through a first CG resource by the first device fails, the first device retransmits the data block through a second CG resource.

In some implementations, in the case where an operating carrier is an unlicensed spectrum when the first device performs data transmission on an SL, when the first device performs initial transmission or retransmission of a data block on a physical sidelink shared channel (PSSCH), the first device needs to determine whether the PSSCH for transmitting the data block is busy through LBT. If the PSSCH is sensed to be idle through LBT, the PSSCH can be used to transmit the data block. If the PSSCH is sensed to be busy through LBT, it indicates that transmission of the data block fails. Alternatively, if the first device initially transmits or retransmits a data block to a second device, and the second device determines that a physical sidelink feedback channel (PSFCH) for receiving initial transmission or retransmission of the data block is busy, it can be determined that initial transmission or retransmission of the data block by the first device fails. Alternatively, if the first device initially transmits or retransmits a data block to the second device, and the second device transmits HARQ NACK feedback for initial transmission or retransmission of the data block, it can be determined that initial transmission or retransmission of the data block by the first device fails. In some implementations, after the first device receives HARQ ACK feedback from the second device, the first device may need to inform the network device of success of transmission of an HARQ process through physical uplink control channel (PUCCH) or physical uplink share channel (PUSCH).

In some implementations, the first CG resource includes N share channel time-domain resources in a period, and the second CG resource includes N share channel time-domain resources in a period. It can be understood that the first CG resource and the second CG resource respectively include N radio resources in a period, where N may be 1, 2, 3, or other positive integers. N radio resources such as N share channel time-domain resources can be used for transmitting a same data block or different data blocks.

In some implementations, the first CG resource may be the same as the second CG resource. For example, if initial transmission or retransmission of the data block through the first CG resource by the first device fails, the first device can further retransmit the data block through the first CG resource. In specific implementations, if initial transmission or retransmission of the data block through a first share channel time-frequency resource in the first CG resource by the first device fails, the first device can retransmit the data block through the first share channel time-frequency resource in the first CG resource or a second share channel time-frequency resource in the first CG resource.

In some implementations, the first CG resource may be different from the second CG resource. For example, if initial transmission or retransmission of the data block through the first share channel time-frequency resource in the first CG resource by the first device fails, the first device retransmits the data block through the second CG resource different from the first CG resource.

In some implementations, initial transmission of the data block and retransmission of the data block correspond to a same HARQ process.

In implementations of the present disclosure, the method may further include the following.

At S200, the first device determines the first CG resource and the second CG resource.

In some implementations, the first device determines SL transmission resources through RRC signaling transmitted by the network device, where the SL transmission resources include at least the first CG resource and the second CG resource, that is, the SL transmission resources may include multiple CG resources.

In some implementations, the first device determines SL transmission resources through RRC signaling and DCI transmitted by the network device, where the SL transmission resources include at least the first CG resource and the second CG resource, that is, the SL transmission resources may include multiple CG resources.

It is to be noted that in implementations of the present disclosure the first device may also be referred to as TX UE, and the second device may also be referred to as RX UE.

FIG. 3 is an optional processing flow chart of a method for data transmission provided in implementations of the present disclosure. The method includes at least the following.

At S301, if initial transmission or retransmission of a data block to a second device through a first CG resource by the first device fails, the second device receives retransmission of the data block through a second CG resource.

In some implementations, failure of initial transmission or retransmission of the data block to the second device through the first CG resource by the first device may include at least one of: failure of LBT detection on a PSSCH by the first device, failure of LBT detection on a PSFCH by the second device, or transmission of HARQ NACK feedback by the second device.

In some implementations, the first CG resource includes N share channel time-domain resources in a period, and the second CG resource includes N share channel time-domain resources in a period. It can be understood that the first CG resource and the second CG resource respectively include N radio resources in a period, where N may be 1, 2, 3, or other positive integers. N radio resources such as N share channel time-domain resources can be used for transmitting a same data block or different data blocks.

In some implementations, the first CG resource may be the same as the second CG resource. For example, if initial transmission or retransmission of the data block through the first CG resource by the first device fails, the first device can further retransmit the data block through the first CG resource, and correspondingly, the second device receives retransmission of the data block through the first CG resource. In specific implementations, if initial transmission or retransmission of the data block through a first share channel time-frequency resource in the first CG resource by the first device fails, the first device can retransmit the data block through the first share channel time-frequency resource in the first CG resource, that is, the second device receives retransmission of the data block through the first share channel time-frequency resource in the first CG resource. Alternatively, the first device retransmits the data block through a second share channel time-frequency resource in the first CG resource, that is, the second device receives retransmission of the data block through the second share channel time-frequency resource in the first CG resource.

In some implementations, the first CG resource may be different from the second CG resource.

For example, if initial transmission or retransmission of the data block through the first share channel time-frequency resource in the first CG resource by the first device fails, the first device retransmits the data block through the second CG resource different from the first CG resource, that is, the second device receives retransmission of the data block through the second CG resource different from the first CG resource.

In some implementations, initial transmission of the data block and retransmission of the data block correspond to a same HARQ process.

In some implementations, initial transmission of the data block and retransmission of the data block correspond to a same HARQ process.

It is to be noted that in implementations of the present disclosure the first device may also be referred to as TX UE, and the second device may also be referred to as RX UE.

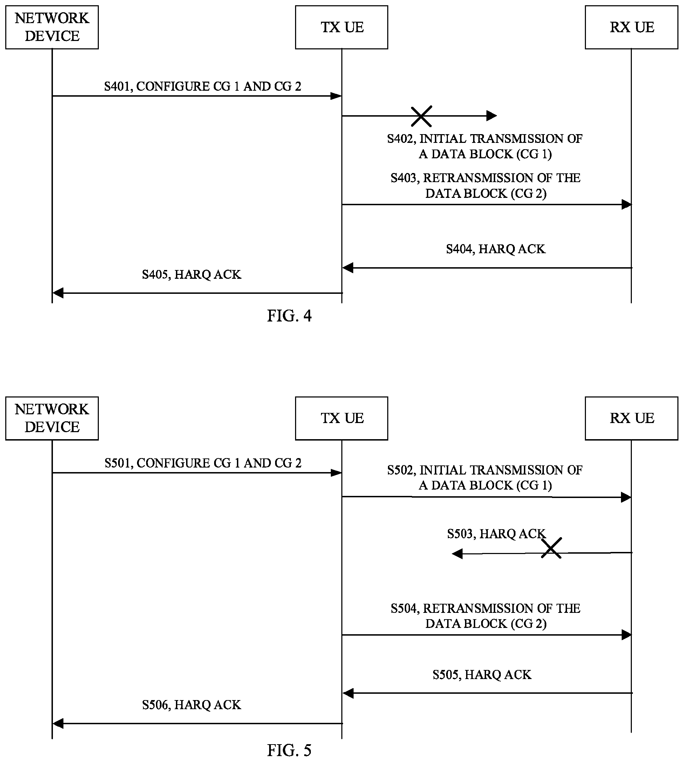

FIG. 4 is an optional detailed processing flow chart of a method for data transmission provided in implementations of the present disclosure. The method includes at least the following.

At S401, a network device configures two sets of CG resources for TX UE.

In some implementations, the two sets of CG resources are respectively CG 1 and CG 2. Both CG 1 and CG 2 can be configured through type-1 CG. Alternatively, both CG 1 and CG 2 can be configured through type-2 CG. Alternatively, one of CG 1 and CG 2 is configured through type-1 CG, and the other of CG 1 and CG 2 is configured through type-2 CG.

At S402, initial transmission of a data block through CG 1 by the TX UE fails.

In some implementations, due to failure of LBT detection on a physical layer, initial transmission of the data block fails. Failure of LBT detection on the physical layer may be failure of LBT detection on a PSSCH by the TX UE.

At S403, the TX UE retransmits, through CG 2, the data block in a process for initial transmission of the data block.

At S404, RX UE successfully transmits HARQ ACK feedback through a PSFCH upon correctly decoding the data block.

At S405, the TX UE transmits HARQ ACK feedback to the network device through a PUCCH.

FIG. 5 is an optional detailed processing flow chart of a method for data transmission provided in implementations of the present disclosure. The method includes at least the following.

At S501, a network device configures two sets of CG resources for TX UE.

In some implementations, the two sets of CG resources are respectively CG 1 and CG 2. Both CG 1 and CG 2 can be configured through type-1 CG. Alternatively, both CG 1 and CG 2 can be configured through type-2 CG. Alternatively, one of CG 1 and CG 2 is configured through type-1 CG, and the other of CG 1 and CG 2 is configured through type-2 CG.

At S502, the TX UE performs initial transmission of a data block through CG 1.

At S503, RX UE fails to transmit HARQ ACK feedback through a PSFCH upon correctly decoding the data block by the RX UE.

In some implementations, failure of transmission of the HARQ ACK feedback through the PSFCH by the RX UE may be failure of transmission of the HARQ ACK feedback due to failure of LBT detection on a PFSCH by the RX UE.

At S504, the TX UE retransmits, through CG 2, the data block in a process for initial transmission of the data block.

In some implementations, if the TX UE receives no HARQ feedback on the PSFCH corresponding to a PSSCH for transmitting the data block, the TX UE retransmits, through CG 2, the data block in a process for initial transmission of the data block.

At S505, the RX UE successfully transmits HARQ ACK feedback through the PSFCH upon correctly decoding the data block.

At S506, the TX UE transmits HARQ ACK feedback to the network device through a PUCCH.

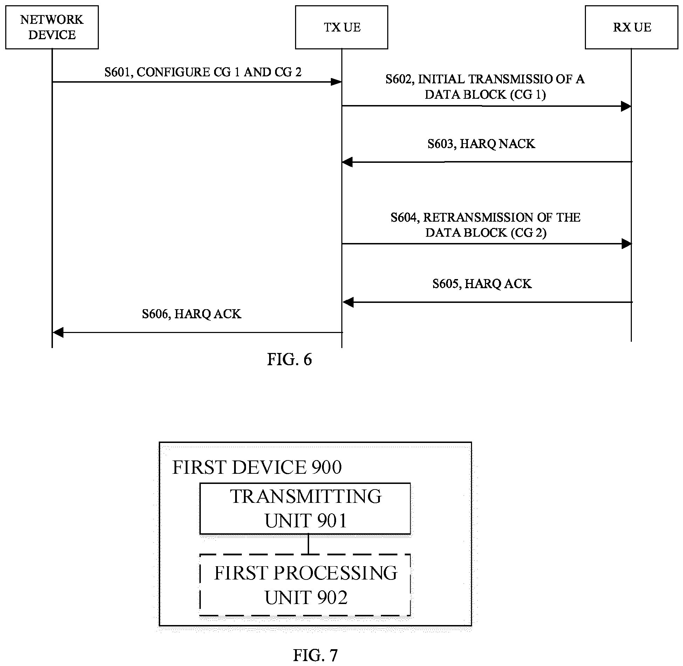

FIG. 6 is yet another optional detailed processing flow chart of a method for data transmission provided in implementations of the present disclosure. The method includes at least the following.

At S601, a network device configures two sets of CG resources for TX UE.

In some implementations, the two sets of CG resources are respectively CG 1 and CG 2. Both CG 1 and CG 2 can be configured through type-1 CG. Alternatively, both CG 1 and CG 2 can be configured through type-2 CG. Alternatively, one of CG 1 and CG 2 is configured through type-1 CG, and the other of CG 1 and CG 2 is configured through type-2 CG.

At S602, TX UE performs initial transmission of a data block through CG 1.

At S603, RX UE transmits HARQ NACK feedback through a PSFCH upon decoding the data block incorrectly.

At S604, the TX UE retransmits, through CG 2, the data block in a process for initial transmission of the data block.

At S605, the RX UE successfully transmits HARQ ACK feedback through the PSFCH upon decoding the data block correctly.

At S606, the TX UE transmits to a network device the HARQ ACK feedback through a PUCCH.

According to a method for data transmission in implementations of the present disclosure, in the case where SL operates in an unlicensed spectrum, if the TX UE fails to transmit a data block through the first CG resource, the TX UE retransmits the data block through the second CG resource. As such, the network device is not required to dynamically schedule a resource for retransmission of the data block, thereby improving reliability and timeliness of retransmission of the data block and improving the efficiency of transmission of the data block.

To implement the above method for data transmission, implementations of the present disclosure further provides a first device. FIG. 7 is an optional schematic structural diagram of a first device 900. The first device 900 includes a transmitting unit 901 configured to retransmit, by the first device, a data block through a second CG resource on condition that initial transmission or retransmission of the data block through a first CG resource by the first device fails.

In some implementations, failure of initial transmission or retransmission of the data block includes at least one of: failure of LBT detection on a PSSCH, failure of LBT detection on a PSFCH, or reception of an HARQ NACK feedback transmitted by a second device.

In some implementations, the first CG resource is the same as the second CG resource, or the first CG resource is different from the second CG resource.

In some implementations, the first CG resource includes N share channel time-domain resources in a period, and/or the second CG resource includes N share channel time-domain resources in a period, where N is a positive integer.

In some implementations, the N share channel time-domain resources are used for transmission of a same data block, or the N share channel time-domain resources are used for transmission of different data blocks.

In some implementations, initial transmission of the data block and retransmission of the data block correspond to a same HARQ process.

In some implementations, the first device 900 further includes a first processing unit 902 configured to determine the first CG resource and the second CG resource.

It is to be noted that in implementations of the present disclosure, the function of the transmitting unit 901 may be implemented via a transceiver, and the function of the first processing unit 902 may be implemented via a processor.

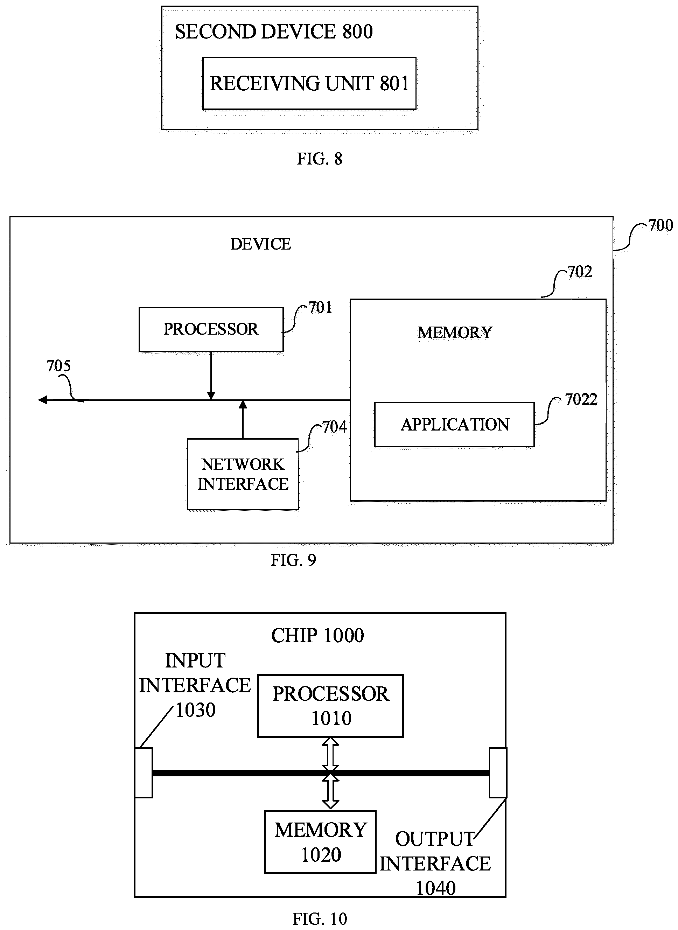

To implement the above method for data transmission, implementations of the present disclosure further provides a second device. FIG. 8 is an optional schematic structural diagram of a second device 800. The second device 800 includes a receiving unit 801 configured to receive, by the second device, retransmission of a data block through a second CG resource on condition that initial transmission or retransmission of the data block to the second device through a first CG resource by the first device fails.

In some implementations, failure of initial transmission or retransmission of the data block includes at least one of: failure of LBT detection on a PSSCH, failure of LBT detection on a PSFCH, or transmission of an HARQ NACK feedback by the second device.

In some implementations, the first CG resource is the same as the second CG resource, or the first CG resource is different from the second CG resource.

In some implementations, the first CG resource includes N share channel time-domain resources in a period, and/or the second CG resource includes N share channel time-domain resources in a period, where N is a positive integer.

In some implementations, the N share channel time-domain resources are used for transmission of a same data block, or the N share channel time-domain resources are used for transmission of different data blocks.

In some implementations, initial transmission of the data block and retransmission of the data block correspond to a same HARQ process.

In some implementations, the second device 800 further includes a second processing unit 802 configured to determine the first CG resource and the second CG resource for receiving the data block.

It is to be noted that in implementations of the present disclosure, the function of the receiving unit 801 may be implemented via a transceiver, and the function of the second processing unit 802 may be implemented via a processor.

Implementations of the present disclosure further provide a first device. The first device includes a processor and a memory configured to store a computer program capable of being run on the processor. The processor is configured to run the computer program to enable the first device to perform steps of the above method for signal transmission.

Implementations of the present disclosure further provide a second device. The second device includes a processor and a memory configured to store a computer program capable of being run on the processor. The processor is configured to run the computer program to enable the second device to perform steps of the above method for signal transmission.

Implementations of the present disclosure further provide a chip. The chip includes a processor configured to invoke and run a computer program in a memory to enable the device equipped with the chip to perform the above method for signal transmission performed by the second device.

Implementations of the present disclosure further provide a chip. The chip includes a processor configured to invoke and run a computer program in a memory to enable the device equipped with the chip to perform the above method for signal transmission performed by the first device.

Implementations of the present disclosure further provide a storage medium. The storage medium stores an executable program. The executable program is executed by the processor to implement the above method for signal transmission performed by the second device.

Implementations of the present disclosure further provide a storage medium. The storage medium stores an executable program. The executable program is executed by the processor to implement the above method for signal transmission performed by the first device.

Implementations of the present disclosure further provide a computer program product. The computer program product includes computer program instructions. The computer program instructions enable a computer to perform the above method for signal transmission performed by the second device.

Implementations of the present disclosure further provide a computer program product. The computer program product includes computer program instructions. The computer program instructions enable a computer to perform the above method for signal transmission performed by the first device.

Implementations of the present disclosure further provide a computer program. The computer program enables a computer to perform the above method for signal transmission performed by the second device.

Implementations of the present disclosure further provide a computer program. The computer program enables a computer to perform the above method for signal transmission performed by the first device.

FIG. 9 is a schematic structural diagram illustrating hardware of a device (the first device or the second device) in implementations of the present disclosure. A device 700 includes at least one processor 701, a memory 702, and at least one network interface 704. Various components of the device 700 are coupled together via a bus system 705. It can be understood that, the bus system 705 is configured for connection and communication between these components. In addition to a data bus, the bus system 705 further includes a power bus, a control bus, and a status signal bus. However, for the clarity of illustration, various buses are marked as the bus system 705 in FIG. 9.

It can be understood that, the memory 702 may be a volatile memory or a non-volatile memory, or may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disc (CD), a compact disc read-only memory (CD-ROM). The magnetic surface memory may be a magnetic disk memory or a magnetic tape memory. The volatile memory can be a random access memory (RAM) that acts as an external cache. By way of example but not limitation, many forms of RAM are available, such as a static random access memory (SRAM), a synchronous static random access memory (SSRAM), a dynamic random access memory (DRAM), a synchronous dynamic random access memory (SDRAM), a double data rate SDRAM (DDRSDRAM), an enhanced SDRAM (ESDRAM), a synclink dynamic random access memory (SLDRAM), and a direct rambus random access memory (DRRAM). The memory 702 described herein is intended to include, but is not limited to, these and any other suitable types of memory.

The memory 702 in implementations of the present disclosure is configured to store various types of data to support operations of the device 700. Examples of these data include any computer programs for operation on the device 700, such as an application 7022. The application 7022 may include programs implementing the methods in implementations of the present disclosure.

The above methods disclosed in the implementations of the present disclosure can be applied in the processor 701 or implemented by the processor 701. The processor 701 may be an integrated circuit chip with signal processing capabilities. During implementation, each step of the foregoing method may be completed by an integrated logic circuit in the form of hardware or an instruction in the form of software in the processor 701. The processor 701 may be a general-purpose processor, a digital signal processor (DSP), or other programmable logic devices, discrete gates or transistor logic devices, or discrete hardware components. The processor 701 can implement or execute the methods, steps, and logic blocks disclosed in implementations of the present disclosure. The general purpose processor may be a microprocessor, or any conventional processors or the like. The steps of the method disclosed in implementations of the present disclosure may be implemented through a hardware decoding processor, or may be performed by hardware and software modules in the decoding processor. The software module can be located in a storage medium. The storage medium is located in the memory 702. The processor 701 reads information in the memory 702, and completes steps of the methods described above with the hardware of the processor.

In exemplary implementations, the device 700 is configured to perform the foregoing methods, implemented by one or more application specific integrated circuits (ASICs), digital signal processing (DSP), programmable logic devices (PLDs), complex programmable logic devices (CPLDs), field-programmable gate arrays (FPGAs), general purpose processors, controllers, micro controller units (MCUs), micro processor units (MPUs), or other electronic components.

The disclosure is described herein with reference to flow charts and/or block diagrams of methods, apparatuses (systems), and computer program products according to the implementations of the disclosure. It should be understood that each flow and/or block in the flow chart and/or block diagram, and a combination of flow and/or block in the flow chart and/or block diagram can be implemented by computer program instructions. These computer program instructions may be provided to a general purpose computer, a special purpose computer, an embedded processor or a processor of other programmable data processing apparatuses to form a machine, such that devices for implementing functions specified by one or more flows in the flow chart and/or one or more blocks in the block diagram may be generated by executing the instructions with the processor of the computer or other programmable data processing apparatuses.

The computer program instructions may also be stored in a computer-readable memory that can direct the computer or other programmable data processing apparatuses to operate in a given manner, so that the instructions stored in the computer-readable memory produce a manufactured article including an instruction device, and the instruction device implements the functions specified by one or more flows in the flow chart and/or one or more blocks in the block diagram.

The computer program instructions may also be loaded onto the computer or other programmable data processing apparatuses, such that a series of process steps may be executed on the computer or other programmable apparatuses to produce processing implemented by the computer, so that the instructions executed on the computer or other programmable apparatuses provide steps for implementing the functions specified by one or more flows in the flow chart and/or one or more blocks in the block diagram.

FIG. 10 is a schematic structural diagram illustrating a chip according to implementations of the present disclosure. As illustrated in FIG. 10, a chip 1000 includes a processor 1010. The processor 1010 is configured to invoke and run a computer program stored in a memory to implement the method provided in implementations of the present disclosure.

Optionally, as illustrated in FIG. 10, the chip 1000 can further include a memory 1020. The processor 1010 is configured to invoke and run computer programs stored in the memory 1020 to implement the method provided in implementations of the present disclosure.

The memory 1020 may be a separate device independent of the processor 1010, or may be integrated into the processor 1010.

Optionally, the chip 1000 may further include an input interface 1030. The processor 1010 can control the input interface 1030 to communicate with other devices or chips. Specifically, information or data transmitted by other devices or chips can be obtained.

Optionally, the chip 1000 further includes an output interface 1040. The processor 1010 can control the output interface 1040 to communicate with other devices or chips. Specifically, information or data can be output to other devices or chips.

Optionally, the chip can be applied to the first device or the second device in implementations of the present disclosure, and the chip can be configured to implement corresponding procedures of various methods in implementations of the present disclosure, which will not be repeated herein for simplicity.

It can be understood that, the chip herein may also be referred to as a system-level chip, a system chip, a chip system, or a system-on-chip (SOC).

It can be understood that, the processor referred to herein may be an integrated circuit chip with signal processing capabilities. During implementation, each step of the foregoing method may be completed by an integrated logic circuit of hardware in the processor or an instruction in the form of software. The processor may be a general-purpose processor, a DSP, an application specific integrated circuit (ASIC), a field programmable gate array (FPGA), or other programmable logic devices, discrete gates or transistor logic devices, discrete hardware components. The methods, steps, and logic blocks disclosed in implementations of the present disclosure can be implemented or executed. The general purpose processor may be a microprocessor, or the processor may be any conventional processor or the like. The steps of the method disclosed in implementations of the present disclosure may be directly implemented as a hardware decoding processor, or may be performed by hardware and software modules in the decoding processor. The software module can be located in a storage medium such as a RAM, a flash memory, a ROM, a PROM, an electrically erasable programmable memory, a register, or the like mature in the art. The storage medium is located in the memory. The processor reads information in the memory, and completes steps of the above-mentioned method with the hardware thereof.

Those of ordinary skill in the art will appreciate that units and algorithmic operations of various examples described in connection with implementations herein can be implemented by electronic hardware or by a combination of computer software and electronic hardware. Whether these functions are performed by means of hardware or software depends on the application and the design constraints of the technical solution. Those skilled in the art may use different methods with regard to each particular application to implement the described functionality, but such methods should not be regarded as lying beyond the scope of the disclosure.

It will be evident to those skilled in the art that, for the sake of convenience and simplicity, in terms of the working processes of the foregoing systems, apparatuses, and units, reference can be made to the corresponding processes of the above method implementations, which will not be repeated herein.

It will be appreciated that the systems, apparatuses, and methods disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interfaces, devices or units, and may be electrical, mechanical, or otherwise.

Separate units as illustrated may or may not be physically separated. Components or parts displayed as units may or may not be physical units, and may reside at one location or may be distributed to multiple networked units. Some or all of the units may be selectively adopted according to practical needs to achieve desired objectives of the implementations.

In addition, various functional units described in implementations herein may be integrated into one processing unit or may be present as a number of physically separated units, and two or more units may be integrated into one.

If the functions are implemented as software functional units and sold or used as standalone products, they may be stored in a computer readable storage medium. Based on such an understanding, the essential technical solution, or the portion that contributes to the related art, or all or part of the technical solution of the disclosure may be embodied as software products. The computer software products can be stored in a storage medium and may include multiple instructions that, when executed, can cause a computing device, e.g., a personal computer, a server, a network device, etc., to execute some or all operations of the methods described in various implementations of the present disclosure. The above storage medium may include various kinds of media that can store program codes, such as a universal serial bus (USB) flash disk, a mobile hard drive, a ROM, a RAM, a magnetic disk, or an optical disk.

The above are merely specific implementations of the present disclosure, but the scope of protection of the present disclosure is not limited thereto. Any change or replacement easily made by those skilled in the art within the technical scope of the present disclosure shall be within the scope of protection of the present disclosure. Therefore, the scope of protection of the present disclosure shall be subject to scope of protection of the appended set of claims.

## Claims

1. A method for data transmission, comprising:
retransmitting, by a first device, a data block through a second configured grant (CG) resource on condition that initial transmission or retransmission of the data block through a first CG resource by the first device fails.

2. The method of claim 1, wherein failure of initial transmission or retransmission of the data block comprises at least one of:
failure of listen before talk (LBT) detection on a physical sidelink share channel (PSSCH);
failure of LBT detection on a physical sidelink feedback channel (PSFCH); or
reception of a hybrid automatic repeat request (HARQ) negative acknowledge (NACK) feedback transmitted by a second device.

3. The method of claim 1 or 2, wherein the first CG resource is the same as the second CG resource; or
the first CG resource is different from the second CG resource.

4. The method of any one of claims 1 to 3, wherein
the first CG resource comprises N share channel time-domain resources in a period; and/or
the second CG resource comprises N share channel time-domain resources in a period; wherein
N is a positive integer.

5. The method of claim 4, wherein the N share channel time-domain resources are used for transmission of a same data block; or
the N share channel time-domain resources are used for transmission of different data blocks.

6. The method of any one of claims 1 to 5, wherein initial transmission of the data block and retransmission of the data block correspond to a same HARQ process.

7. The method of any one of claims 1 to 6, further comprising:
determining, by the first device, the first CG resource and the second CG resource.

8. A method for data transmission, comprising:
receiving, by a second device, retransmission of a data block through a second configured grant (CG) resource on condition that initial transmission or retransmission of the data block to the second device through a first CG resource by a first device fails.

9. The method of claim 8, wherein failure of initial transmission or retransmission of the data block comprises at least one of:
failure of listen before talk (LBT) detection on a physical sidelink share channel (PSSCH);
failure of LBT detection on a physical sidelink feedback channel (PSFCH); or
transmission of a hybrid automatic repeat request (HARQ) negative acknowledge (NACK) feedback by the second device.

10. The method of claim 8 or 9, wherein the first CG resource is the same as the second CG resource; or
the first CG resource is different from the second CG resource.

11. The method of any one of claims 8 to 10, wherein
the first CG resource comprises N share channel time-domain resources in a period; and/or
the second CG resource comprises N share channel time-domain resources in a period; wherein
N is a positive integer.

12. The method of claim 11, wherein the N share channel time-domain resources are used for transmission of a same data block; or
the N share channel time-domain resources are used for transmission of different data blocks.

13. The method of any one of claims 8 to 12, wherein initial transmission of the data block and retransmission of the data block correspond to a same HARQ process.

14. A first device, comprising:
a transmitting unit configured to retransmit, by the first device, a data block through a second configured grant (CG) resource on condition that initial transmission or retransmission of the data block through a first CG resource by the first device fails.

15. The first device of claim 14, wherein failure of initial transmission or retransmission of the data block comprises at least one of:
failure of listen before talk (LBT) detection on a physical sidelink share channel (PSSCH);
failure of LBT detection on a physical sidelink feedback channel (PSFCH); or
reception of a hybrid automatic repeat request (HARQ) negative acknowledge (NACK) feedback transmitted by a second device.

16. The first device of claim 14 or 15, wherein the first CG resource is the same as the second CG resource; or
the first CG resource is different from the second CG resource.

17. The first device of any one of claims 14 to 16, wherein
the first CG resource comprises N share channel time-domain resources in a period; and/or
the second CG resource comprises N share channel time-domain resources in a period; wherein
N is a positive integer.

18. The first device of claim 17, wherein the N share channel time-domain resources are used for transmission of a same data block; or
the N share channel time-domain resources are used for transmission of different data blocks.

19. The first device of any one of claims 14 to 18, wherein initial transmission of the data block and retransmission of the data block correspond to a same HARQ process.

20. The first device of any one of claims 14 to 19, further comprising:
a first processing unit configured to determine the first CG resource and the second CG resource.

21. A second device, comprising:
a receiving unit configured to receive, by the second device, retransmission of a data block through a second configured grant (CG) resource on condition that initial transmission or retransmission of the data block to the second device through a first CG resource by a first device fails.

22. The second device of claim 21, wherein failure of initial transmission or retransmission of the data block comprises at least one of:
failure of listen before talk (LBT) detection on a physical sidelink share channel (PSSCH);
failure of LBT detection on a physical sidelink feedback channel (PSFCH); or
transmission of a hybrid automatic repeat request (HARQ) negative acknowledge (NACK) feedback by the second device.

23. The second device of claim 21 or 22, wherein the first CG resource is the same as the second CG resource; or
the first CG resource is different from the second CG resource.

24. The second device of any one of claims 21 to 23, wherein the first CG resource comprises N share channel time-domain resources in a period; and/or
the second CG resource comprises N share channel time-domain resources in a period; wherein
N is a positive integer.

25. The second device of claim 24, wherein the N share channel time-domain resources are used for transmission of a same data block; or
the N share channel time-domain resources are used for transmission of different data blocks.

26. The second device of any one of claims 21 to 25, wherein initial transmission of the data block and retransmission of the data block correspond to a same HARQ process.

27. A first device comprising: a processor and a memory configured to store a computer program capable of being run on the processor;
the memory being configured to store the computer program, and the processor being configured to invoke and run the computer program stored in the memory to perform steps of the method of any one of claims 1 to 7.

28. A second device comprising: a processor and a memory configured to store a computer program capable of being run on the processor;
the memory being configured to store the computer program, and the processor being configured to invoke and run the computer program stored in the memory to perform steps of the method of any one of claims 8 to 13.

29. A chip comprising a processor configured to invoke and run a computer program in a memory, to enable a device equipped with the chip to perform the method of any one of claims 1 to 7.

30. A chip comprising a processor configured to invoke and run a computer program in a memory, to enable a device equipped with the chip to perform the method of any one of claims 8 to 13.

31. A computer-readable storage medium storing a computer program, the computer program enabling a computer to perform steps of the method of any one of claims 1 to 7.

32. A computer-readable storage medium storing a computer program, the computer program enabling a computer to perform steps of the method of any one of claims 8 to 13.

33. A computer program product comprising computer program instructions, the computer program instructions enabling a computer to perform the method of any one of claims 1 to 7.

34. A computer program product comprising computer program instructions, the computer program instructions enabling a computer to perform the method of any one of claims 8 to 13.

35. A computer program, the computer program enabling a computer to perform the method of any one of claims 1 to 7.

36. A computer program, the computer program enabling a computer to perform the method of any one of claims 8 to 13.
